# EUROPEAN PATENT APPLICATION

(11) **EP 1 612 660 A1**
(43) Date of publication of application: **04.01.2006**
(21) Application number: 05076434.9
(22) Date of filing: 20.06.2005
(51) Int. Cl.: G06F 3/16

(54) **Sound recording communication system and method**

(30) Priority: 29.06.2004 EP 04076868
(71) Applicant: GMB Tech (Holland) B.V., 1213 PG Hilversum (NL)
(72) Inventor: Borovitski, Michael, 1223 AD Hilversum (NL)
(74) Representative: Land, Addick Adrianus Gosling

(57) **Abstract**

A sound recording communication system, the system comprising:
- a sound recording device, such as a microphone;
- a computing device including a microprocessor and a memory;
- a data connection with the computing device having Internet connection;
- an interface linking the sound recording device to the microprocessor, for converting audio data or sound into electric signals;
- switching means on the sound recording device, for switching the sound recording device;
- audio data recording and processing means, for converting the electric signals into an audio data recording, starting at a first moment in time and ending at a second moment in time, and for storing the audio data recording in the memory;
- control means, for defining the states of the audio data recording device induced by the buttons; and
- application control means in communication with the control means driving the interfaces of the application modules.

## Description

The present invention provides a sound recording communication system and a method of creating a message like E-mail, command, voice attachments and the like to be used in several applications through a corresponding interface.

Known sound recording communication systems enable a user to dictate messages by using a dictating machine and having these messages typed out by an assistant. Also, sound recorded commands are being used to control a Personal Computer (PC) using a microphone that is linked to this PC. Besides control commands such a system can be used to dictate text. The use of these command and/or text dictating systems is restricted to standard work settings like e.g. an office and is quite time-consuming. Although hands free handling of phone calls when driving a car is enabled through the use of communication means like a speaker and a microphone, e.g. hands free E-mail processing is not supported.

Although these systems are being used several drawbacks exist including restricted usability of presently available systems with respect to the combination of different applications that can be performed on different non-standard locations, e.g. when travelling, such as processing messages and E-mail, searching weather forecasts and traffic information, using e.g. blue tooth, cable or USB connections.

Thus there exists a growing need for a system and a method to obviate the above mentioned drawbacks.

The present invention therefore provides a sound recording communication system, the system comprising:
- a sound recording device, such as a microphone;
- a computing device including a microprocessor and a memory;
- a data connection with the computing device having Internet connection;
- an interface linking the sound recording device to the microprocessor, for converting audio data or sound into electric signals;
- switching means on the sound recording device, for switching the sound recording device between a first neutral state and a second active state;
- audio data recording and processing means, for converting the electric signals into an audio data recording, starting at a first moment in time and ending at a second moment in time, and for storing the audio data recording in the memory;
- control means, for defining the first and second state of the audio data recording device induced by the buttons; and
- application control means in communication with the control means driving the interfaces of the application modules.

The system according to the present invention provides the possibility of performing the reading and writing of E-mail to and from clients, internet chats with clients, keyword internet searches, control of media players and tuners, consumer electronics controls, operating systems user settings control and text-to-speech and speech-to-text in one system, executable not only in standard work settings, like an office, but also in other settings, like car, train, home-use etc.. The system according to present invention combines all these functions and operations thereby extending the user's possibilities to perform all these functions and operations when and where desired.

In a preferred embodiment the control means of the system are coupled to switching means or buttons for controlling the function of the active state thereof. Thus the function of the buttons can be user determined, improving ease of use of the system. Also the system can be adapted.

In a further preferred embodiment the buttons comprise a first button having a non-pushed state corresponding to the neutral state of the switching means and a pushed state corresponding to the active state of the switching means. The first button provides easier switching used for short messages. The sound is recorded as long as the first button is pushed.

In still a further embodiment the buttons comprise a second button having a non-pushed state and a pushed state, wherein the first state of the switching means is initialized by a first time that the second button is in its pushed state and wherein the second state of the switching means is initialized by a second time that the second button is in its pushed state. The second button provides easier switching used for longer messages. After pushing the button a first time the sound recording starts and after pushing it a second time the sound recording stops.

Preferably the system comprises compression means, which are arranged between the sound recording means and the control means, for compressing the sound recording using a technique such as MPEG layer-3. The sound recording can also be stored in the memory using a WAVE-format. However, this format requires much bigger storage capacity for storing the recording. By compressing the sound recording sending and/or storing it is easier and faster.

In yet a further preferred embodiment the interface between the recording system and a computer device like a PC or mobile phone is e.g. a game port or a USB port or a wireless (bluetooth) connection.

According to another aspect the present invention provides a method of creating a message and/or command, comprising the steps of:
- providing a sound recording system comprising a wired or wireless Blue tooth earphone, headset or desktop microphone and a computing device such as a mobile phone including a microprocessor and a memory;
- pushing one or more buttons at the recording system for switching from a first neutral state to a second active state;
- the system starting a sound recording of the message;
- the system finishing the sound recording;
- storing the sound recording in the memory;
- creating a message for the desired application; and
- performing the desired operation on the stored sound recording of the message in the desired application.

Further advantages and features of the system according to the present invention will be elucidated with reference to the annexed drawings that are mainly directed towards E-mail processing and keyword internet searching, however, these are equally relevant for any of the above mentioned applications, in which:
fig. 1 shows an overall perspective view of a system according to the present invention in a preferred embodiment;
fig. 2 shows a perspective view of the microphone of fig. 1;
fig. 3 shows a side view of a microphone according to the present invention in a second preferred embodiment; and
fig. 4 shows a block diagram of a sound recording communication system according to the present invention.

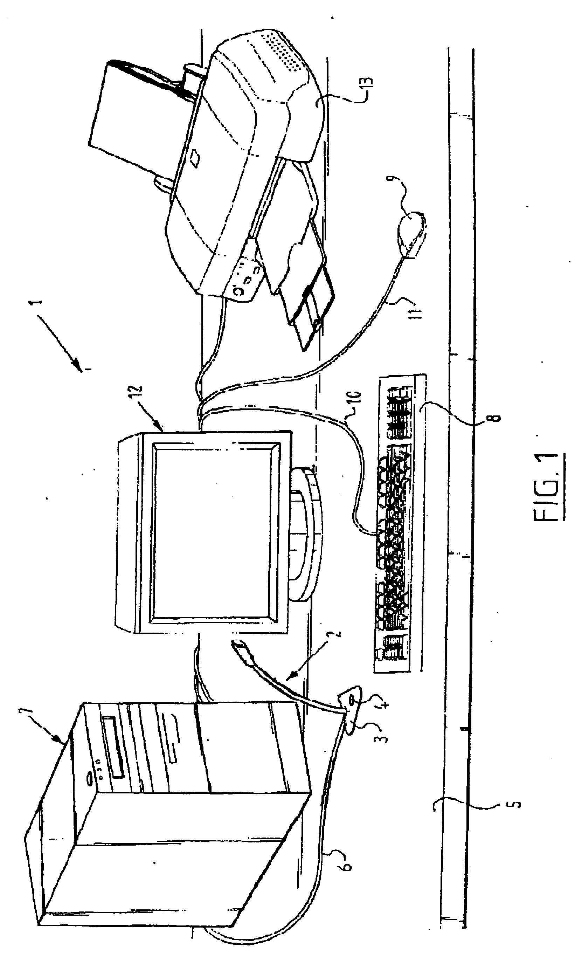

A sound recording communication system 1 according to the present invention (fig. 1) comprises in a preferred embodiment a microphone 2 which includes a base 3, whereon at least one button 4 is arranged, for placing the microphone on a desk 5. Via wire 6 the microphone 2 is connected to a PC 7. The PC 7 is also connected to a keyboard 8 and a mouse 9 for inputting information via wires 10, 11 and to a monitor 12 for displaying output information thereon. In the shown embodiment also a printer 13 is connected to the PC 7.

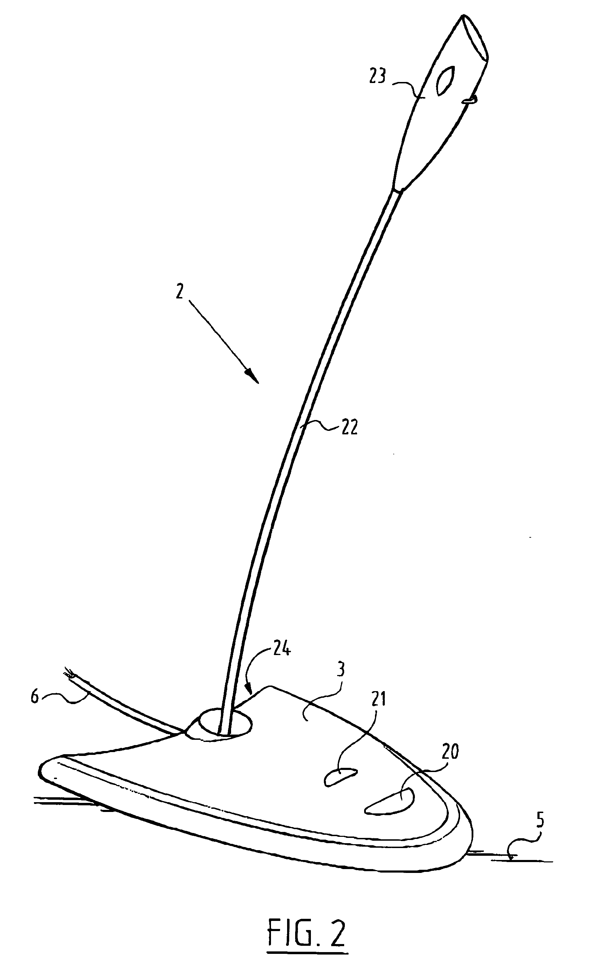

The microphone 2 comprises a base 3 which is substantially triangular or V-shaped for providing a firm and steady arrangement of the microphones on desktop 5 (fig. 2). On the base 3 two buttons 20, 21 are arranged. The buttons are user-programmable to perform frequently-used commands, such as the starting or ending of a recording. The functionality of the buttons will be described in more detail below. Extending upwardly from the base an elongated flexible rubber cylinder 22 is arranged, at the end of which a thickened head 23 is arranged incorporating a pick-up element (not shown) for converting sound to electric signals.

The sound recording communication systems according to the invention comprises one or more buttons 20, 21 shown in fig. 2. The buttons are coupled to the microphone and are able to switch between a first state and a second state. The first state is defined as OFF, or neutral, and the second state is defined as ON, or active. If a user pushes for instance a button, the means switch to ON resulting in sound recording means to record the electric signals coming from the microphone in a suitable format, such as the WAVE format. For ease of handling the sound recording can be compressed into preferably a MPEG layer-3 format, which can be up to ten times compressed compared to the WAVE format. Subsequently control means store the compressed recording in the memory of the computing device, after which the application means create a corresponding message and/or command to be handled in the sound recording communication system.

The control means provide the parameters for compression. Also they can be used to configure the buttons. Thus a user can configure the buttons 20, 21. As an example, button 20 can be configured for relatively short messages, wherein pushing button 20 corresponds to ON and releasing the button 20 corresponds to OFF. On the other hand, button 21 can be configured for longer messages, wherein pushing button 21 once corresponds to ON, and pushing it a second time corresponds to OFF. A sound output device (speakers) may be connected to the connector for sound output interface 24 for producing sound feedback from the computing device.

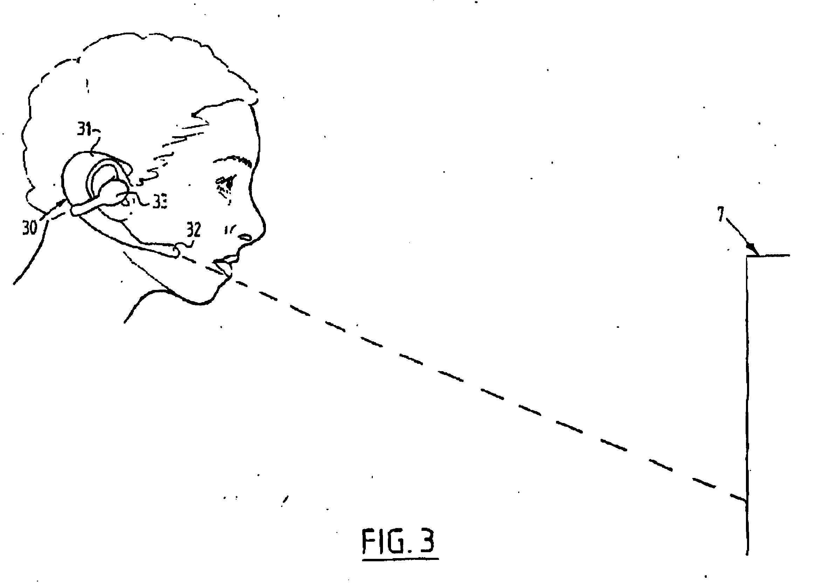

In a second embodiment the microphone is included in earpiece 30 (fig. 3). The earpiece includes a curved part 31 for attaching thereof at the ear of a user. The curved part extends into an elongated part, extending partly to the mouth of the user when the earpiece is attached to the ear, at the end 32 of which the pick-up element is arranged. Furthermore, the earpiece 30 comprises a speaker 33 for producing sound into the ear of a user. The earpiece can transmit and receive electromagnetic signals either wireless or via a wire to and from PC 7. Sound recording control is either performed through the use of above mentioned buttons or voice commands by the user.

The microphone 2 or earpiece 30 is connected to the computer through an interface. In a first embodiment the interface is a game port or USB port.

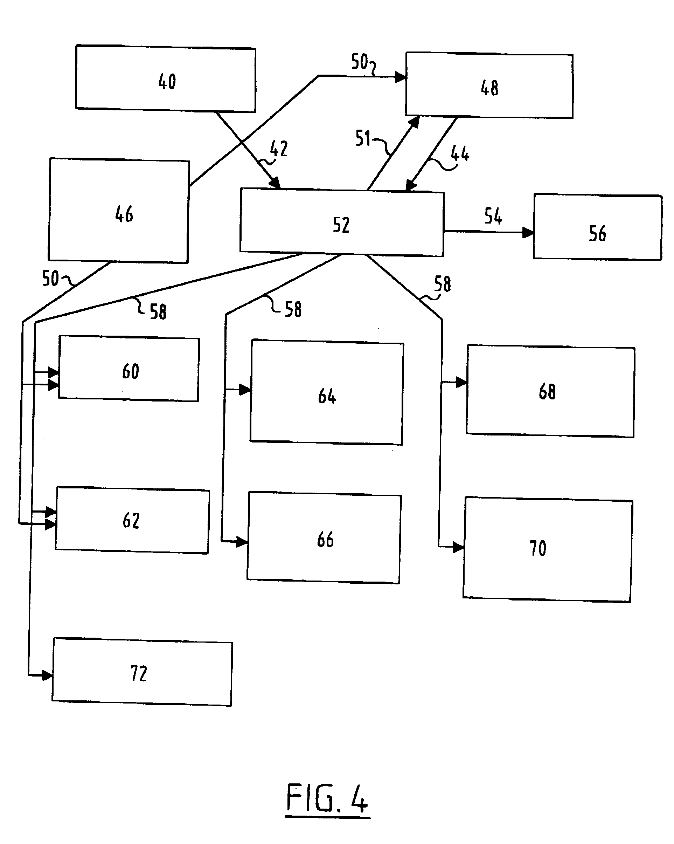

The sound recording communication system consists of several different modules and interfaces, as shown in fig. 4. The buttons monitoring module 40 refers to dedicated hardware that enables the computing device to receive (sound) information by giving button commands 42. These buttons can also be used to go through different menus of the sound recording communication system and confirm choices made in these menus. To create voice commands 44, the beginning and ending of such a command is marked using the button commands 42 of the buttons monitoring module 40 and the audio data recording and processing module 46 and the voice control engine 48 process the sound recordings or audio data 50. The audio data recording and processing module 46 comprises dedicated hard- and software and stores the sound recordings or audio data in the memory of the computing device. The voice control engine 48 recognises voice commands 44, using the engine activation and deactivation signals 51, and directly goes to the correct menu. The voice commands 44 are sent to the software applications control module 52 that comprises dedicated software to combine all application modules and interfaces of the entire system. From the control module 52 text data 54 is sent to the voice menu module 56 that gives an overview of possible actions and can be built e.g. by the user. Every selected option in a menu is being read by the voice menu module 56. The software applications control module 52 sends its commands 58 to the functional interfaces of the one of possible and configured interfaces that is selected by the user. These interfaces include an E-mail clients interface 60 that is used to get and send E-mails. The internet chat clients interface 62 is used to enable the use of so called chat software (MSN, ICQ, Yahoo, etc) wherein typed messages of others can be read and user's messages are being sent as sound data. The keyword internet search engine interface 64 is being used to get certain specific information, such as news, weather forecasts, sport events, stock exchange information etc, from the internet and to read this information. The media players and tuners interface 66 is being used to control music or digital radio. The consumer electronics controls interface 68 is used to control specific functions, such as turning on/off, changing volume etc, with computer controlled means. The operational system user settings control interface 70 is used to change specific computer setting. The text-to-speech engines interface 72 is used by the other modules to read out text. Furthermore, it would be possible to use a speech-to-text module.

Possible applications include the hands free processing of E-mails behind the steering wheel for which the same Blue tooth headset currently used to receive and make phone calls, with the help of some extra buttons located on it, can be used; easily communication for disabled or blind people, as only two buttons are enough to be able to communicate with the world that can be supplied with the Braille symbols engraved on them; providing communication means for very young children who are not able to read/write yet.

Possible operations using the sound recording communication system include: issuing certain commands to retrieve information or control external equipment "on the go", processing E-mail that may comprise the steps of reading a message from the PC, answering the message by dictating it, process the reading and converting to e.g. MP3 format and sending the message; performing keyword internet searches for asking information on weather forecasts or traffic situation that may comprise the steps of pushing the button to start the command, possibly voice recognition, providing the command, sending the command over the internet connection, receiving the information and presenting the information to the user.

In a practical embodiment the system includes an omni-directional condenser type microphone, having a sensitivity of -40 dB and a frequency range from 50 to 16000 Hz. The directivity of the microphone is adjustable to cancel background noise. The computer includes a microprocessor, a memory such as RAM, a sound card, a game port and/or a USB port. The components of the system can be implemented either in hardware, software or a combination thereof.

The present invention is not limited to the above described preferred embodiments, in which many modifications can be envisaged, within the scope of the appended claims.

## Claims

1. A sound recording communication system, the system comprising:
- a sound recording device, such as a microphone;
- a computing device including a microprocessor and a memory;
- a data connection with the computing device having Internet connection;
- an interface linking the sound recording device to the microprocessor, for converting audio data or sound into electric signals;
- switching means on the sound recording device, for switching the sound recording device between a first neutral state and a second active state;
- audio data recording and processing means, for converting the electric signals into an audio data recording, starting at a first moment in time and ending at a second moment in time, and for storing the audio data recording in the memory;
- control means, for defining the first and second state of the audio data recording device induced by the buttons; and
- application control means in communication with the control means driving the interfaces of the application modules.

2. A system according to claim 1, wherein the sound recording system is a wired or wireless Blue tooth earphone or headset.

3. A system according to claims 1 or 2, wherein the buttons are used to download and listen to the messages, to process those messages replying to them by voice and to create and send new messages.

4. A system according to claims 1, 2 or 3, wherein the switching means comprise one or more buttons to control the recording of messages or commands.

5. A system according to any of claims 1-4, wherein the text of the downloaded messages can be automatically converted to speech and played back.

6. A system according to any of claims 1-5, wherein by using one of the buttons to mark the beginning and ending of the recording, the user can dictate his message which is then going to be recorded, compressed and saved as file in the memory of a computer/mobile phone, and then sent as e.g. attachment to an E-mail message.

7. A system according to any of claims 1-6, wherein the computing device includes a Personal Computer, laptop, mobile phone.

8. A system according to any of claims 1-7, wherein messages are used to perform the reading and writing of E-mail to clients and internet chatting with clients, driven by commands of the application control means and using audio data from the audio data recording and processing means.

9. A system according to any of claims 1-8, wherein messages are used to perform keyword internet searching, driven by commands of the application control means.

10. A system according to any of claims 1-9, wherein messages are used to perform setting media players and tuners, setting consumer electronics controls, control operating system user settings, driven by commands of the application control means..

11. A system according to any of claims 1-10, wherein messages are used to perform text-to-speech and speech-to-text driven by commands of the application control means and using audio data from the audio data recording and processing means.

12. A system according to any of claims 1-11, wherein the buttons have Braille symbols engraved on them.

13. Method for communicating a message, comprising the steps of:
- providing a sound recording system comprising a wired or wireless Blue tooth earphone, headset or desktop microphone and a computing device such as a mobile phone including a microprocessor and a memory;
- pushing one or more buttons at the recording system for switching from a first neutral state to a second active state;
- the system starting a sound recording of the message;
- the system finishing the sound recording;
- storing the sound recording in the memory;
- creating a message for the desired application; and
- performing the desired operation on the stored sound recording of the message in the desired application.

14. Method according to claim 13, wherein for E-mail communication the step of creating a message comprises saving the audio data in MP3 format and the step of performing the desired operation comprises attaching of the saved data to an E-mail message.

15. Method according to claim 13, wherein for keyword internet searches the step of performing the desired operation comprises:
- sending the search command over the internet connection;
- receiving information; and
- presenting the information to the user.

16. Method according to claims 13-15, wherein the desired operation performed on the recording includes reading and writing E-mail to clients and internet chatting with clients driven by commands of the application control means and using audio data from the audio data recording and processing means.

17. Method according to claims 13-16, wherein the desired operation performed on the recording includes keyword internet searching driven by commands of the application control means.

18. Method according to claims 13-17, wherein the desired operation performed on the recording includes controlling media players and tuners, setting consumer electronics controls and controlling operating system user settings driven by commands of the application control means.

19. Method according to claims 13-18, wherein the desired operation performed on the recording includes text-to-speech and/or speech-to-text, driven by commands of the application control means and using audio data from the audio data recording and processing means.
